# EUROPEAN PATENT APPLICATION

(11) **EP 2 730 507 A2**
(43) Date of publication of application: **14.05.2014**
(21) Application number: 13187599.9
(22) Date of filing: 07.10.2013
(51) Int. Cl.: B64D 33/08, B64D 41/00, F02C 3/32

(54) **Methods for directing cooling flow into the surge plenum of an exhaust eductor cooling system**

(30) Priority: 09.11.2012 US 201213673036
(71) Applicant: Honeywell International Inc., Morristown, NJ 07962-2245 (US)
(72) Inventor: Bouldin, Bruce Dan, Morristown, NJ New Jersey 07962-2245 (US); Shepard, Eric, Morristown, NJ New Jersey 07962-2245 (US); Smalley, Larry, Morristown, NJ New Jersey 07962-2245 (US); Yogi, Yogendra, Morristown, NJ New Jersey 07962-2245 (US)
(74) Representative: Houghton, Mark Phillip

(57) **Abstract**

A method and apparatus is provided for cooling the external surface of an aircraft APU eductor assembly (104). A processor is configured to open a surge valve (119) by a predetermined amount when the surge valve is closed and the temperature of the exhaust gas exceeds a predetermined temperature in order to cool the surge plenum surfaces.

## Description

### TECHNICAL FIELD

Embodiments described herein relate to an exhaust eductor system, and more particularly, to a system and method for cooling the surge plenum of an eductor exhaust system.

### BACKGROUND

Many modem aircraft are equipped with an auxiliary power unit ("APU") that generates and provides electrical and pneumatic power to various parts of the aircraft for tasks such as environmental cooling, lighting, powering electronic systems, and main engine starting. Typically, such APUs are located in the aft section of the aircraft such as the tail cone and are isolated by a firewall. During operation, an APU produces exhaust gas that is directed through a nozzle and out of the aircraft through an exhaust opening. The nozzle may communicate with an eductor system that utilizes the APU exhaust gas to draw and direct other gases through the aircraft.

To achieve this, eductor systems have been developed that include a first plenum (i.e. the oil cooler plenum) that draws gas across an oil cooler, and a second plenum (i.e. the surge plenum) that directs surge flow to an exhaust duct (i.e. air not required by the aircraft to satisfy its pneumatic requirements, commonly referred to as surge bleed flow or customer airflow. The cooling plenum collects the air as it exits the oil cooler and allows the airflow to pass into the exhaust stream. The surge plenum collects the surge airflow before it passes into the exhaust airflow.

As previously stated, surge airflow occurs when the APU system produces more customer airflow than is required by the aircraft. In this case, a customer bleed valve will close to restrict the amount of airflow provided to the aircraft. To prevent the APU compressor from surging, a second valve (i.e. the surge valve) will open. This open surge valve directs the excess air flow (i.e. the surge flow) into the surge plenum and then into the exhaust.

During normal APU operation, the surge valve is frequently closed providing no airflow into the surge plenum. When this occurs, the surge plenum becomes a dead-headed cavity permitting hot exhaust gases to flow into it. The accumulation of hot exhaust gases in the surge plenum heats the exterior skin of the surge plenum to unacceptable levels. These high temperatures on the exterior skin of the eductor can potentially damage tail cone skins.

Furthermore, the aft facing outlet of the dead-headed surge plenum cavity is exposed to the mixed eductor flow; i.e. the turbine exhaust at perhaps 1000°F and the cooling air from the cooling plenum at approximately 200°F. Thus, the mixed eductor flow, which may be about 500°F, enters the surge plenum, circulating in and out of the surge plenum, and heating the surge plenum to approximately 500°F, exceeding the strict temperature limits (i.e. 450°F) that is imposed on the outer surfaces of the APU including the surge plenum.

In accordance with the forgoing, it would be desirable to provide a system and method for directing a cooling flow into the surge plenum to reduce the temperature of the surge plenum surfaces when there is otherwise no surge flow.

### BRIEF DESCRIPTION OF THE DRAWINGS

FIG. 1 is a cross-sectional view of an aircraft auxiliary a power unit (APU) including an eductor system disposed therein;

FIG. 2 is a cross-sectional view of an exemplary eductor oil cooler and surge flow plenum assembly that may be incorporated into the tail cone depicted in FIG. 1;

FIG. 3 is a cross-sectional view of the exemplary eductor oil cooler and surge flow plenum illustrating the recirculation of exhaust gas in the surge plenum when there is no surge flow;

FIG. 4 is a flow-chart illustrating an exemplary embodiment of a process for determining when airflow should be diverted to the surge plenum;

FIG. 5 is a block diagram of a system for carrying on the process described in FIG. 4;

FIG. 6 is an isometric view of an APU exhaust nozzle; and

FIG. 7 is a graph illustrating the improvement in surge plenum skin temperature when the techniques described herein are employed.

### BRIEF SUMMARY

This summary is provided to introduce a selection of concepts in a simplified form that are further described below in the detailed description. This summary is not intended to identify key features or essential features of the claimed subject matter, nor is it intended to be used as an aid for determining the scope of the claimed subject matter.

In accordance with the foregoing, there is provided a method for cooling the external surface of an aircraft APU inductor assembly surge plenum comprising diverting customer airflow to the surge plenum when there is otherwise no surge flow.

There is also provided an eductor system for use in conjunction with an aircraft APU. The system comprises a surge plenum and a surge duct for providing excess air not required by the aircraft to the surge plenum. A processor is coupled to the surge duct and the surge plenum and is configured to divert air intended for the aircraft to the surge plenum when there is no excess air, the diverted air for cooling the surge plenum.

Also, provided is a method for cooling the external surface of an aircraft APU eductor assembly surge plenum when there is otherwise no surge flow, comprising diverting customer air to the surge plenum by opening a surge valve between ten and fifteen percent when the APU exhaust gas temperature exceeds 1,000°F.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components and with reference to symbolic representations of operations, processing tasks, and functions that may be performed by various computing components or devices. Such operations, tasks, and functions are sometimes referred to as being computer-executed, computerized, software-implemented, or computer-implemented. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

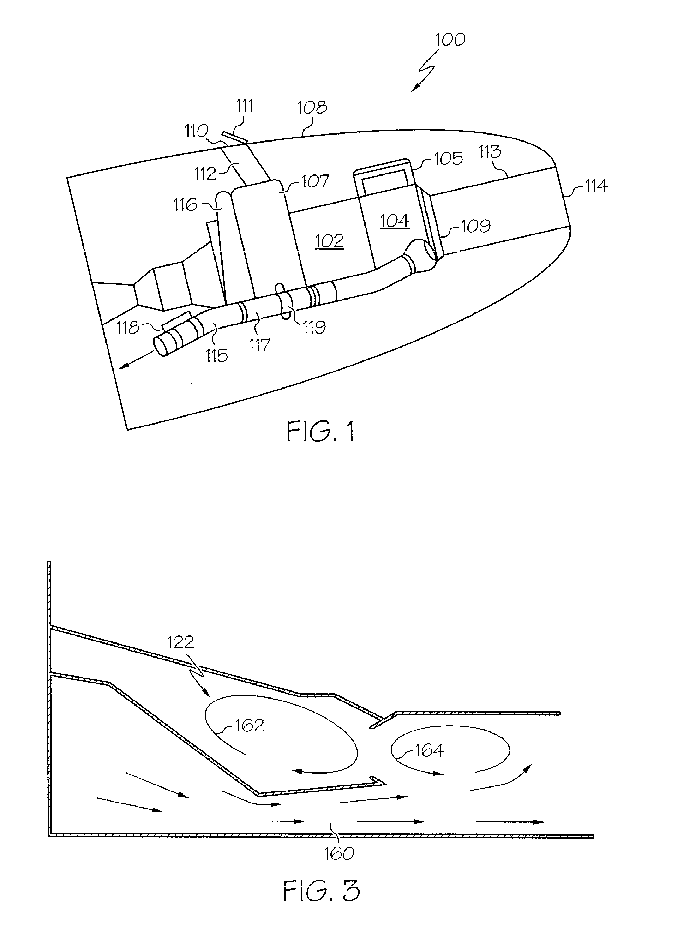

Turning now to the description, FIG. 1 illustrates a housing 100 within which a power unit 102, an eductor 104, an oil cooler 105, and an air plenum 107 are disposed. The housing 100, which may be an aircraft tail cone or helicopter housing, is generally conical and has a sidewall 108, an inlet door 111, inlet 110, an inlet duct 112, and an exhaust opening 114 formed therein. The power unit 102, which may be an auxiliary power unit ("APU"), used to drive a number of non-illustrated devices, including, for example, a gearbox, a generator, etc., is mounted within the housing 100 and receives air from inlet duct 112. The power unit 102 communicates with the eductor 104 and may include an engine compressor, an engine, and a turbine, as is well known. It will be appreciated that the power unit 102 and eductor 104 may indirectly or directly communicate with each other. In any case, exhaust gas from the power unit 102 flows through the eductor 104 and nozzle 109 and exits the aircraft via the exhaust opening 114. Also shown in FIG. 1 is a load compressor and scroll 116 which supplies air to bleed duct 115 and surge duct 117. Cooperating with bleed duct 115 is a bleed valve 118 and surge valve 119.

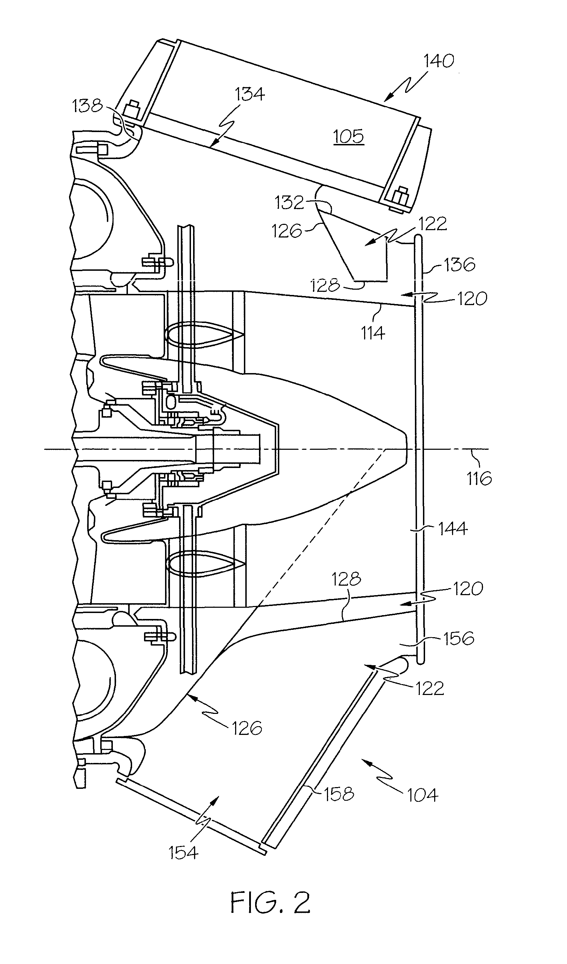

Surge airflow occurs when the aircraft requires less customer airflow than the APU is producing. When this happens, bleed valve 118 closes; however, to prevent load compressor 116 from surging, surge valve 119 will open producing a surge flow into the surge plenum 122 (FIGS. 2 and 3), which is subsequently drawn into the exhaust flow and exits at exhaust opening 114. However, surge valve 119 is frequently closed providing no air to the surge plenum, permitting hot exhaust gasses to accumulate in the surge plenum, which in turn heats the exterior skin of the surge plenum to unacceptable levels as previously described.

Referring now to FIG. 2, an oil cooler plenum 120 includes a fluid inlet 134 and a fluid outlet 136. The fluid inlet 134 communicates with an oil cooler duct 138 in cooperation with which an oil cooler 105 is disposed. Preferably, the oil cooler plenum 120 surrounds an entire circumference of nozzle 114 to maximize contact between high velocity APU exhaust gas that flows through the nozzle 114 and the gas that is pulled through the oil cooler plenum 120 to thereby increase pumping of gas through the fluid inlet 134. To further increase pumping of gas through the fluid inlet 134, the fluid outlet 136 is aligned with an end 144 of the nozzle 114. Thus, gas flowing through the fluid outlet 136 will be entrained by the high velocity APU exhaust gas and both will flow together through the exhaust duct 113 (shown in FIG. 1).

It will be appreciated that the volume of space needed to accommodate the cooled gas decreases as distance from the fluid inlet 134 increases, and that the gas in the oil cooler plenum 120 preferably flows around the circumference of nozzle 114 at a substantially constant flow velocity. In this regard, wall 126 may slope toward the longitudinal axis 116 forward to aft and is disposed nonconcentric ally therewith. As a result, the oil cooler plenum 120 includes a plurality of variously sized radial cross-sectional areas at different axial locations along the longitudinal axis 116 and a plurality of variously sized axial cross-sectional areas at different angular locations relative to the longitudinal axis 116. The cross-sectional areas, which, preferably gradually decrease in size when the distance from the fluid inlet 134 increases, may be disposed asymmetrically about the longitudinal axis 116.

The surge flow plenum 122 is partially defined by walls 126 and 132 and includes a fluid inlet 154 and a fluid outlet 156. The fluid inlet 154 communicates with a surge bleed entry duct 158 that is coupled to or integrally formed as part of the outer wall 132. The fluid outlet 156 is preferably axially aligned with and coterminous with the oil cooler plenum fluid outlet 136.

Similar to the oil cooler plenum 120, the surge flow plenum 122 preferably includes a plurality of variously sized axial cross-sectional areas at different angular locations relative to the longitudinal axis 116. Most preferably, the areas of the axial cross-sections gradually decrease as the distance away from the surge flow fluid inlet section increases without overlapping the oil cooler plenum 120. In other embodiments, the oil cooler plenum 120 may surround the first circumferential section of the nozzle 109 (FIG. 1) and the surge flow plenum 122 may surround the second circumferential section and a portion of the first circumferential section.

During operation, the power unit 102 directs high velocity exhaust gas out of nozzle 109. When gas is needed to cool the oil cooler 140, the gas enters the oil cooler 140, travels through fluid inlet 134, and flows through the oil cooler duct 138 into the oil cooler plenum 120. When the gas exits the oil cooler fluid outlet 136, it is pulled through the exhaust duct 113 by the high velocity exhaust gas. The pull of the exhaust gas causes additional gas to be pumped into the oil cooler plenum 120. Occasionally, surge flow gas may be dumped into the surge bleed entry duct 158 and into the surge flow plenum 122 as previously described.

As stated earlier, when there is no surge flow, the surge plenum becomes a dead-headed cavity with its aft outlet exposed to the mixed eductor flow which is about 500⁰F. This flow enters the surge plenum 122 and may continuously recirculate in and out of the surge plenum 122 heating the surge plenum surface to an unacceptable level. This situation is illustrated in FIG. 3. With no surge flow in to surge plenum 122, heated mixed eductor flow 160 recirculates in and out of surge plenum 122 as is indicated by arrows 162 and 164.

Embodiments described herein contemplate the diversion and use of a portion of the customer airflow being generated by the APU to purge the hot air recirculating in the surge plenum as described in connection with FIG. 3. It has been discovered that the use of a small portion of the customer airflow for this purpose does not significantly impact the customer. Thus, the external wall of the eductor plenum may be cooled by opening the surge valve a predetermined amount to divert customer airflow into the surge plenum.

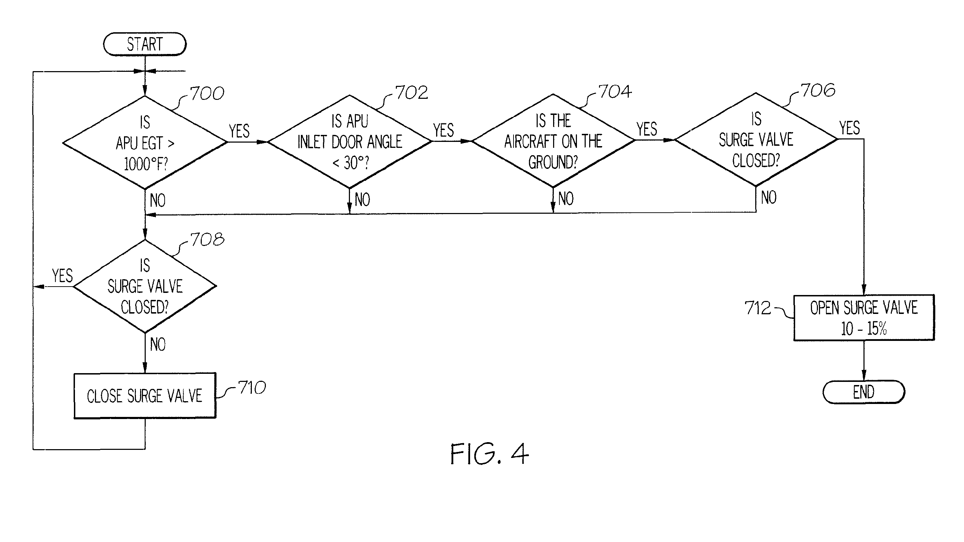

FIG. 4 is a flow chart of an exemplary embodiment for determining when customer air should be diverted to the surge plenum. It has been determined that there are four conditions precedent to taking corrective action; i.e. diverting customer airflow into the surge plenum. First, it should be determined that the APU exhaust gas temperature (EGT) has reached a predetermined temperature (e.g. greater than 1,000°F) (STEP 700). This may be accomplished my means of a processor that monitors the EGT by means of temperature probes positioned in the exhaust gas flow stream. Of course this threshold temperature may vary depending on the eductor plenum material, plenum size and shape, proximity of the tail cone to the hot eductor surfaces, etc. In addition, the APU inlet door 111 should be less than a predetermined angle such as thirty degrees. Once again, this may vary depending on circumstances such as customer power requirements (STEP 702). It should be understood that the problem of excessive surge plenum skin temperature occurs mostly when the aircraft is on the ground but consuming customer air; e.g. during passenger boarding. Therefore, it is determined whether or not the aircraft is on the ground (STEP 704). This may be accomplished, for example, providing the processor with the output of a weight-on-wheels (WOW) sensor. Finally, it should be determined if the surge valve is currently closed (STEP 706). Finally, the processor knows and controls the position of the surge valve. It should be understood that while the determinations made in STEPS 700, 702, 404 and 706 are shown as occurring sequentially, they may occur in any order, and in a preferred embodiment will occur substantially simultaneously.

If any of the questions asked in STEPS 700, 702, 404 and 706 are answered in the negative, the system determines if the surge valve is closed (STEP 708). If not, the surge valve is closed (STEP 710), and the process returns to START. If all conditions precedent are met, the surge valve is opened (STEP 712) by, for example, 10-15% providing air to the surge plenum to cool its outer skin.

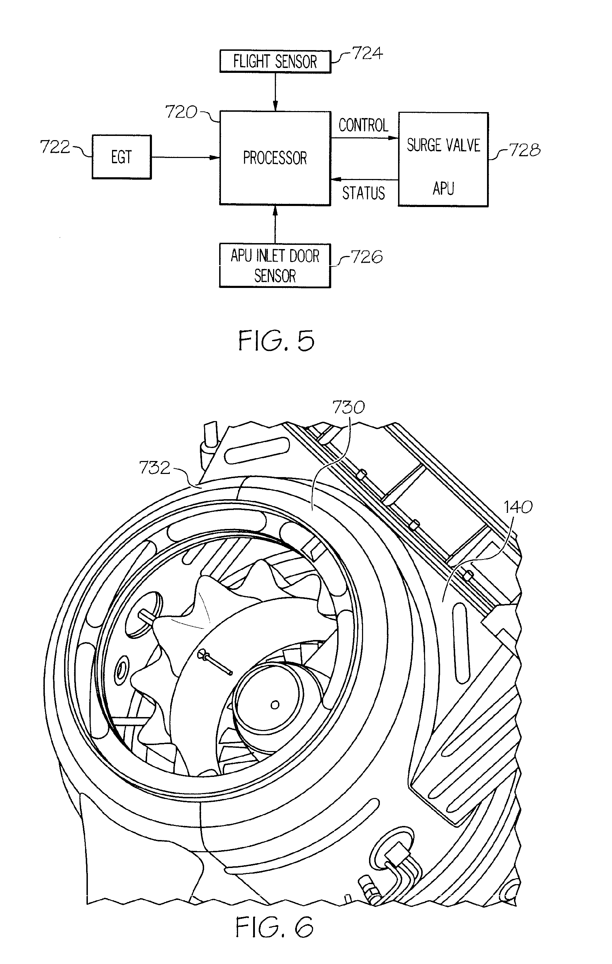

FIG 5 is a block diagram of a system for carrying out the process of FIG. 4. As can be seen, a processor 720 receives (1) the exhaust gas temperature (EGT) from probes in the exhaust stream 722; (2) an indication that the aircraft is on the ground from WOW sensor 724; the degree to which APU inlet door 726 is open (monitored by processor 720); and an indication of whether or not the surge valve is open or closed from 728 (monitored and controlled by processor 720). As indicated above, processor 720 receives an indication of whether or not the surge valve is open or closed and will open the surge valve if the conditions precedent described earlier are met.

FIG. 5 is a simplified block representation, and for the sake of clarity and brevity, does not depict the vast number of systems and subsystems that would appear onboard a practical implementation of an aircraft. Instead, FIG. 1 merely depicts some of the notable functional elements and components that support the various features, functions, and operations described herein. In this regard, the aircraft may include, without limitation: a multiple processor architecture; one or more primary thrust engines; an engine-based taxi system; a fuel supply; wheel assemblies; an auxiliary power unit (APU); an electric taxi system; and a brake system. These elements, components, and systems may be coupled together as needed to support their cooperative functionality.

Each processor architecture 720 may be implemented or realized with at least one general purpose processor, a content addressable memory, a digital signal processor, an application specific integrated circuit, a field programmable gate array, any suitable programmable logic device, discrete gate or transistor logic, discrete hardware components, or any combination designed to perform the functions described herein. A processor device may be realized as a microprocessor, a controller, a microcontroller, or a state machine. Moreover, a processor device may be implemented as a combination of computing devices, e.g., a combination of a digital signal processor and a microprocessor, a plurality of microprocessors, one or more microprocessors in conjunction with a digital signal processor core, or any other such configuration. As described in more detail below, the processor architecture 720 is configured to support various processes, operations, and display functions.

In practice, processor 720 may be realized as an onboard component of an aircraft (e.g., a flight deck control system, a flight management system, or the like), or it may be realized in a portable computing device that is carried onboard the aircraft. For example, the processor 720 could be realized as the central processing unit (CPU) of a laptop computer, a tablet computer, or a handheld device.

Processor 720 may include or cooperate with an appropriate amount of memory (not shown), which can be realized as RAM memory, flash memory, EPROM memory, EEPROM memory, registers, a hard disk, a removable disk, a CD-ROM, or any other form of storage medium known in the art. In this regard, the memory can be coupled to processor 720 such that the processor can read information from, and write information to, the memory. In the alternative, the memory may be integral to the processor architecture. In practice, a functional or logical module/component of the system described here might be realized using program code that is maintained in the memory. Moreover, the memory can be used to store data utilized to support the operation of the system.

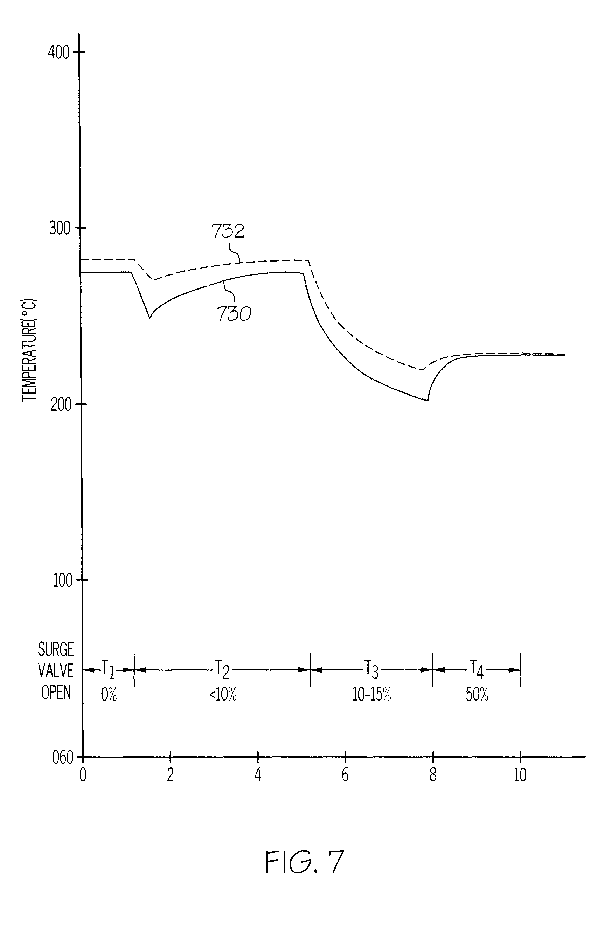

FIG. 6 is an isometric view of the nozzle portion 109 through which the exhaust gasses flow, and FIG. 7 illustrates the temperature characteristics at locations 730 (close to oil cooler 140) and 732 (at top center of the eductor system approximately thirty degrees counterclockwise from 730) as a function of the position of the surge valve. During time period T₁, the surge valve is closed, and the temperature is approximately 276-283°C. During time period T₂, the surge valve is only slightly opened (less than ten percent) as shown in FIG. 7. While there is a slight initial drop in temperature (25-30°C), the temperature rapidly increases to substantially its original value. However, during time period T₃, the surge valve is opened to between ten and fifteen percent, and the temperature drop is significant; i.e. approximately 70°C or approximately twenty-five percent. Above ten percent, the temperature again rises.

Thus, there has been provided a system and method for directing a cooling flow into the surge plenum to reduce the temperature of the surge plenum surfaces when there is otherwise no surge flow by diverting aircraft customer air to the surge plenum without significantly impacting aircraft operation.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method for cooling the external surface of an aircraft APU inductor assembly surge plenum, comprising diverting customer airflow to the surge plenum when there is otherwise no surge flow.

2. The method of Claim 1 wherein the step of diverting comprises opening a surge valve by a predetermined amount.

3. The method of Claim 2 wherein the step of opening comprises opening the surge valve at least ten percent.

4. The method of Claim 3 wherein the step of opening comprises opening the surge valve no more than fifteen percent.

5. The method of Claim 2 wherein the step of opening comprises opening the surge valve if the temperature of APU exhaust is at least 1,000°F.

6. The method of Claim 2 further comprising opening the surge valve if an APU inlet door is open no more than thirty degrees.

7. The method of Claim 2 further comprising determining if the aircraft is on the ground.

8. The method of Claim 2 further comprising first determining if the surge valve is closed.

9. The method of Claim 2 wherein the step of opening comprises opening the surge valve between ten and fifteen percent.

10. A method for cooling the external surface of an aircraft APU eductor assembly surge plenum, comprising diverting customer airflow to the surge plenum by opening a surge valve between ten and fifteen degrees when the APU exhaust gas temperature exceeds 1,000°F.
